(19) Europäisches Patentamt
European Patent Office
Office européen des brevets

(11) **EP 4 056 405 A1**

(12) **EUROPEAN PATENT APPLICATION**
published in accordance with Art. 153(4) EPC

(43) Date of publication:
**14.09.2022 Bulletin 2022/37**

(21) Application number: **20885744.1**

(22) Date of filing: **05.11.2020**

(51) International Patent Classification (IPC):
***B60L 7/14*** (2006.01) ***B60L 15/20*** (2006.01)
***H02P 27/06*** (2006.01) ***B60L 9/18*** (2006.01)
***H02J 7/00*** (2006.01) ***H02J 7/10*** (2006.01)
***B60L 50/60*** (2019.01) ***B60L 58/13*** (2019.01)
***B60L 58/14*** (2019.01) ***B60L 58/15*** (2019.01)

(52) Cooperative Patent Classification (CPC):
**B60L 7/14; B60L 9/18; B60L 15/20; B60L 50/60; B60L 58/13; B60L 58/14; B60L 58/15; H02J 7/00; H02P 27/06;** Y02T 10/64; Y02T 10/70; Y02T 10/72

(86) International application number:
**PCT/JP2020/041363**

(87) International publication number:
**WO 2021/090885 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.11.2019 JP 2019201488**
**28.04.2020 JP 2020079446**

(71) Applicants:
- **DENSO CORPORATION**
  **Kariya-city, Aichi 448-8661 (JP)**
- **Suzuki Motor Corporation**
  **Hamamatsu-shi, Shizuoka 432-8611 (JP)**

(72) Inventors:
- **SUZUKI, Masaru**
  **Kariya- city, Aichi 448-8661 (JP)**
- **KITAGAWA, Yasuhisa**
  **Kariya- city, Aichi 448-8661 (JP)**
- **KOBUNA, Shingo**
  **Hamamatsu-shi, Shizuoka 432-8611 (JP)**
- **OKAWACHI, Ryohei**
  **Hamamatsu-shi, Shizuoka 432-8611 (JP)**
- **KATO, Hirotaka**
  **Hamamatsu-shi, Shizuoka 432-8611 (JP)**

(74) Representative: **TBK**
**Bavariaring 4-6**
**80336 München (DE)**

# (54) VEHICULAR CONTROL DEVICE

(57) A vehicle control apparatus (50) has: a target value setting unit that sets a value of a target starting torque (Ttgt, Trq*) for starting a vehicle (10), by gradually increasing the value of the target starting torque from 0 to a value of a prescribed torque; a control unit that performs switching control of an inverter (30) for controlling the torque generated by a rotary electric machine (20) to the value of the target starting torque; a state determination unit that determines whether a power storage device (31) is in a state in which charging is limited; and in response to determining that the power storage device is in the state in which the charging is limited, a regeneration limiting unit that, when the rotary electric machine is functioning as a generator, restricts a regeneration torque of the rotary electric machine to a greater degree when the charging of the power storage device is limited than when the charging is not limited. When it is determined that the power storage device is in the state in which the charging is limited, the target value setting unit reduces a rate at which the target starting torque increases from 0 to the prescribed torque, by comparison with the rate of increase to the prescribed torque when it is determined that the power storage device is in the state in which the charging is not limited.

EP 4 056 405 A1

FIG.4

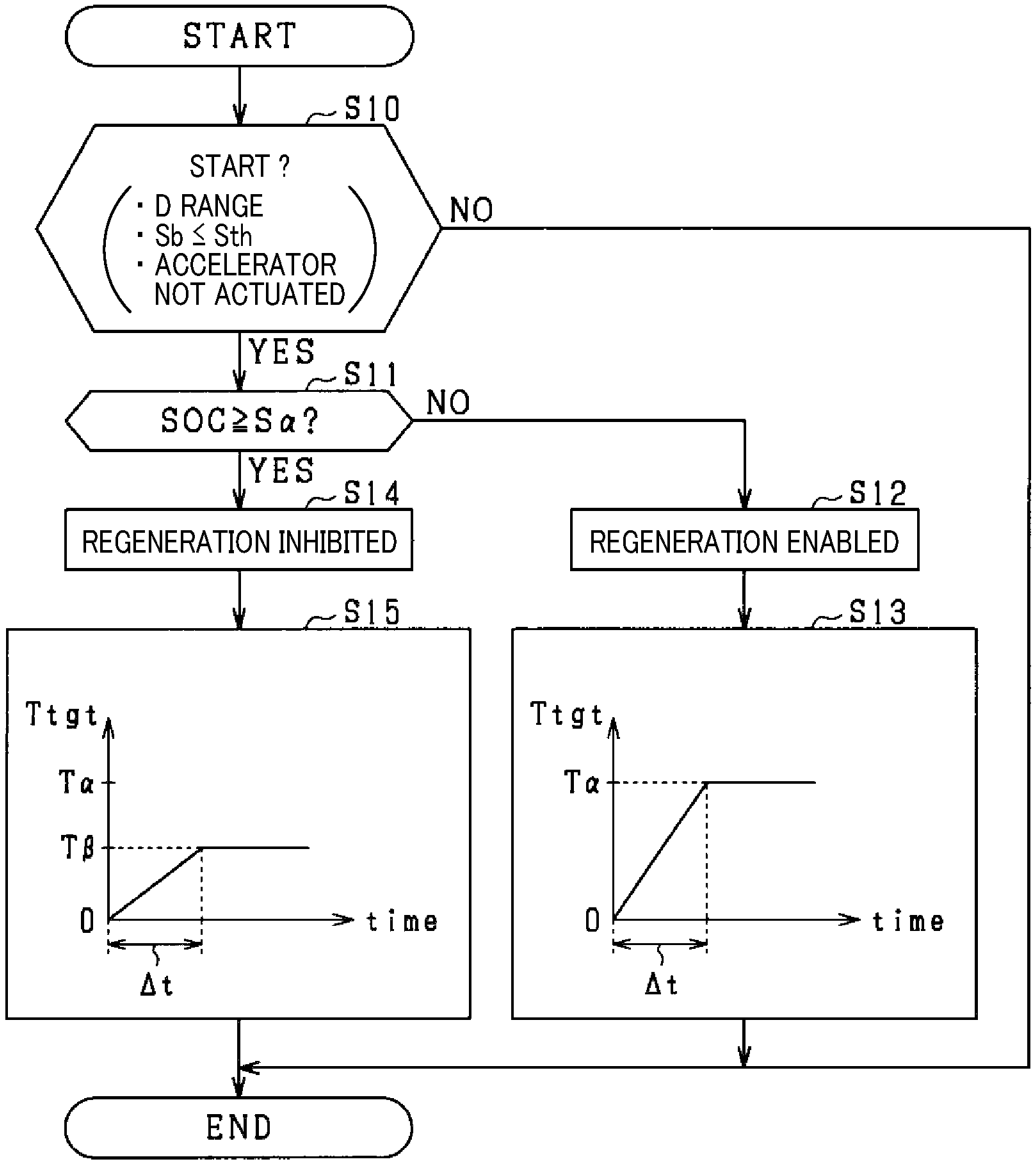
START
S10
START ?
· D RANGE
· Sb ≤ Sth
· ACCELERATOR NOT ACTUATED
NO
YES
S11
SOC≧Sα?
NO
YES
S14
REGENERATION INHIBITED
S12
REGENERATION ENABLED
S15
Ttgt
Tα
Tβ
0
time
Δt
S13
Ttgt
Tα
0
time
Δt
END

## Description

[Cross Reference to Related Applications]

This application is based on and claims the benefit of priority from earlier Japanese Patent Application No. 2019-201488 filed on November 6, 2019 and Japanese Patent Application No. 2020-079446 filed on April 28, 2020, the entire contents of which are hereby incorporated by reference.

[Technical Field]

The present disclosure relates to a vehicle control apparatus.

[Background Art]

A control apparatus is known in the prior art, for example as seen in PTL 1, for application to a vehicle that is equipped with a power storage device, an inverter, and a rotary electric machine. The power storage device is electrically connected to the stator winding of the rotary electric machine via the inverter.

[Citation List]

[Patent Literature]

[PTL 1] JP 6058564 B

[Summary of the Invention]

A rotor of a rotary electric machine can transmit power to the drive wheels of a vehicle via a drive shaft. In order to start such a vehicle, the control apparatus sets a value of target starting torque by gradually increasing the torque from 0 (zero) to a value of prescribed torque, and performs switching control of the inverter for setting the torque generated by the rotary electric machine to the target starting torque. When the control apparatus determines that the power storage device is in a state whereby charging of the power storage device is limited, then in order to protect the power storage device from overcharging, the control apparatus restricts regenerative torque produced by the rotary electric machine when it functions as a generator, with the regenerative torque being restricted to a greater degree than when the charging is not limited.

During torque generation, increasing the generated torque of the rotary electric machine from 0 to the value of the prescribed torque causes torsion of the drive shaft of the rotary electric machine, and vibration is generated by the torsion. Due to this vibration, the rotation speed of the rotor fluctuates through zero. Thus, the rotation speed alternates between periods in which the speed becomes positive and periods in which the speed becomes negative.

In that case, if the target starting torque is set to a positive torque, instructing that the vehicle is to move forward, the rotary electric machine attempts to generate the regenerative torque during the periods in which the rotation speed becomes negative. However, when the charging of the power storage device is limited, the regenerative torque of the rotary electric machine is limited accordingly, so that the rotary electric machine cannot maintain the prescribed regeneration torque, and hence the generated torque becomes significantly less than the prescribed torque. On the other hand, during the periods in which the rotation speed becomes positive the rotary electric machine functions as an electric motor, i.e., regeneration is not performed, and hence the generated torque of the rotary electric machine does not significantly decrease from the prescribed torque.

The torque generated by the rotary electric machine thus fluctuates greatly due to these periods in which the rotation speed of the rotor becomes alternately positive and negative. This torque fluctuation increases the fluctuation of the rotation speed of the rotor caused by the torsion of the of the drive shaft, that is, by torque applied to the drive shaft, and there is a concern that it may cause deterioration of drivability.

The problem of drivability deterioration can occur even when the target starting torque is set to a negative value, instructing that the vehicle is to travel in reverse.

One or more aspects of the present disclosure are directed to provide a vehicle control apparatus capable of suppressing such decrease in drivability.

A vehicle control apparatus according to an aspect of the present disclosure is a device applied to a vehicle equipped with:

a power storage device;
an inverter electrically connected to the power storage device;
a rotary electric machine having a stator winding and a rotor with the stator winding electrically connected to the inverter; and
a drive shaft that transmits motive power between the rotor and the drive wheels.

The vehicle control apparatus is provided with:

a target value setting unit that sets a value of a target starting torque for starting the vehicle, by gradually increasing the value of the target starting torque from 0 to a value of a prescribed torque;
a control unit that performs switching control of the inverter for controlling the torque generated by the rotary electric machine to the value of the target starting torque;
a state determination unit that determines whether the power storage device is in a state in which charging is limited; and
in response to determining that the power storage device is in the state in which the charging is limited, a regeneration limiting unit that, when the rotary electric machine is functioning as a generator, restricts a regeneration torque of the rotary electric machine to a greater degree when the charging of the power storage device is limited than when the charging is not limited.

When it is determined that the power storage device is in the state in which the charging is limited, the target value setting unit reduces a rate at which the target starting torque increases from 0 to the prescribed torque, by comparison with the rate of increase to the prescribed torque when it is determined that the power storage device is in the state in which the charging is not limited.

With the target value setting unit of the present disclosure, when the power storage device is in the state in which the charging is limited, the rate at which the target starting torque increases from 0 to the prescribed value is made lower than the rate at which the torque increases when the power storage device is in the state in which the charging is not limited. As a result, vibration generated due to the torsion of the drive shaft can be reduced, and the amount of fluctuation the rotation speed of the rotor can be reduced. It is thus possible to suppress deterioration of drivability while protecting the power storage device from overcharging.

With the target value setting unit of the present disclosure, it would be equally possible, when it is determined that the power storage device is in the state in which the charging is limited, to make the prescribed value of torque less than when it is determined that the power storage device is in the state in which the charging is not limited.

With this configuration, it is possible to reduce the amount of fluctuation of the torque generated by the rotary electric machine in the periods in which the rotation speed of the rotor becomes alternately positive and negative. As a result, the amount of fluctuation in the rotation speed can be reduced, and decrease in drivability can be suppressed.

[Brief Description of the Drawings]

The above and other purposes, features and advantages of the present disclosure will be made clearer by the following detailed description, given with reference to the following drawings.

Fig. 1 is an overall configuration diagram of an in-vehicle system according to a first embodiment.
Fig. 2 is a timing chart showing a variation mode of rotor rotation speed according to a comparative example.
Fig. 3 is a diagram showing an operating region of a rotary electric machine,
Fig. 4 is a flowchart showing a processing procedure of an EV-ECU.
Fig. 5 is a flowchart showing a processing procedure of an EV-ECU according to a second embodiment.
Fig. 6 is a timing chart which shows a process of an EV-ECU according to a third embodiment.
Fig. 7 is a flowchart showing a processing procedure of an EV-ECU according to the third embodiment.
Fig. 8 is a flowchart showing a processing procedure of an EV-ECU according to a fourth embodiment.
Fig. 9 is an overall block diagram of a vehicle system according to a fifth embodiment.
Fig. 10 is a block diagram showing an EV-ECU process.
Fig. 11 is a flowchart showing a processing procedure of the EV-ECU.
Fig. 12 is a flowchart showing a processing procedure of an EV-ECU according to a sixth embodiment.

[Description of the Embodiments]

<First Embodiment>

An embodiment of a vehicle control apparatus according to the present disclosure will be described in the following with reference to the drawings. The control apparatus of the present embodiment is mounted on a vehicle, such as an electric vehicle, having only a rotary electric machine as a motive power source.

As shown in Fig. 1, the vehicle 10 includes a rotary electric machine 20, an inverter 30, and a storage battery 31 as a power storage device. In the present embodiment, the rotary electric machine 20 has a three-phase stator winding 21 and a rotor 22, and is, for example, a permanent magnet type synchronous machine.

The vehicle 10 includes a transmission 23, a drive shaft 24, and drive wheels 25. The rotor 22 of the rotary electric machine 20 is capable of transmitting power to the drive wheels 25 via the transmission 23 and the drive shaft 24. That is, the rotary electric machine 20 serves as a motive power source for the vehicle 10.

The stator winding 21 of the rotary electric machine 20 is electrically connected to the storage battery 31 via the inverter 30. The inverter 30 has switches for the upper and lower arms thereof. The storage battery 31 is assembled as a series-connected plurality of cells, and is a secondary battery such as a lithium-ion storage battery or a nickel hydrogen storage battery.

The vehicle 10 includes a battery ECU 32 for monitoring the storage battery 31, and an EV-ECU 50. The battery ECU 32 detects the voltage of each cell of the storage battery 31, the battery temperature Tbat, which is the temperature of the storage battery 31, and the like. Based on these detected values, the battery ECU 32 sets the discharge power limit value Wout and charging power limit Win of the storage battery 31, and calculates the state of charge (SOC), etc., of the battery. The limit values Wout and Win are stored, for example as map information related to the SOC and the battery temperature, in a memory which is a storage device included in the battery ECU 32. The memory is a non-transitory tangible recording medium other than a ROM (for example, a non-volatile memory other than a ROM). The battery ECU 32 transmits the set limit values Wout, Win, the calculated SOC, the battery temperature Tbat, and the like to the EV-ECU 50.

The vehicle 10 includes an accelerator sensor 40, a brake sensor 41, a shift position sensor 42, and a rotation angle sensor 43. The accelerator sensor 40 detects the accelerator stroke Sacc, which is the amount of depression of the accelerator pedal as the accelerator operating member is actuated by the driver of the vehicle. The brake sensor 41 detects the brake stroke Sb, which is the amount of depression of the brake pedal as the brake operating member is actuated by the driver of the vehicle. The shift position sensor 42 detects the operating state to which the shift lever is operated by the driver. The operating states includes a range whereby the vehicle 10 is instructed to move forward, a range whereby the vehicle 10 is instructed to move in reverse, and the like. In the present embodiment, the range whereby the vehicle 10 is instructed to move forward is designated as the D range, and the range whereby the vehicle 10 is instructed to move in reverse is designated as the R range.

The rotation angle sensor 43 detects the rotation angle (electrical angle) of the rotor 22, and is, for example, a resolver. The detected values of the sensors 40 to 43 are transmitted to the EV-ECU 50.

The EV-ECU 50 performs switching control of the upper and lower arm switches of the inverter 30 based on the detection values from the rotation angle sensor 43 and the like, to control the torque generated by the rotary electric machine 20. Specifically, the EV-ECU 50 performs drive power control which converts the DC power output from the storage battery 31 into AC power by switching control, and supplies the AC power to the stator winding 21. When this control is performed, the rotary electric machine 20 functions as an electric motor and generates a powering torque. Furthermore, the EV-ECU 50 performs regenerative drive control, which is switching control for converting AC power generated by the rotary electric machine 20 into DC power and supplying the DC power to the storage battery 31. When this control is performed, the rotary electric machine 20 functions as a generator and generates a regenerative torque.

When the generated torque of the rotary electric machine 20 exceeds the limit torque Tlimit, the EV-ECU 50 performs a process of limiting the generated torque to the limit torque Tlimit. If it is determined that the storage battery 31 is in a fully charged state, the EV-ECU 50 performs a process (corresponding to a "regeneration limiting unit") to make the limit torque Tlimit less than when it is determined that the storage battery 31 is not in a fully charged state. In particular with the present embodiment, when the EV-ECU 50 determines that the storage battery 31 is in a fully charged state, the limit torque Tlimit is set to 0 (zero).

Even when the accelerator pedal is not being depressed by the driver, creep travel of the vehicle 10 may occur, if the brake stroke Sb is equal to or less than the brake threshold value Sth. For that reason, when creep travel begins, the EV-ECU 50 sets a target creep torque Ttgt (corresponding to a "target starting torque") as the generated torque, which is gradually increased from 0 to a value of a prescribed torque. The EV-ECU 50 performs switching control of the inverter 30 for controlling the torque generated by the rotary electric machine 20 to the target creep torque Ttgt.

A problem caused by starting to increase the generated torque from 0 to the value of the prescribed torque will be described here with reference to Fig. 2. Fig. 2(a) shows transitions of the brake stroke Sb detected by the brake sensor 41, Fig. 2(b) shows transitions of the rotation speed Nm of the rotor 22, Fig. 2(c) shows transitions of the charging power limit value Win, and Fig. 2(d) shows transitions of the generated torque Tr and the limiting torque Tlimit of the rotary electric machine 20.

Fig. 2 shows respective transition waveforms when the vehicle 10 is halted and the shift position is in the D range. Furthermore, Fig. 2 shows the transitions of each waveform when the storage battery 31 is in a fully charged state. In the example shown in Fig. 2, the charging power limit value Win is set to 0 (zero) because the storage battery 31 is in a fully charged state.

As the amount of depression of the brake pedal is gradually reduced, from time t1, the target creep torque Ttgt starts to be increased from 0, and the generated torque Tr of the rotary electric machine 20 also starts to increase from 0. Here, the drive shaft 24 becomes twisted due to the increase in the generated torque Tr, and vibration caused by the torsion is generated. Due to this vibration, the rotation speed Nm of the rotor 22 fluctuates through zero. Fig. 2(a) shows that the rotation speed Nm starts to fluctuate from a time point slightly before the time t2.

The operating regions of the rotary electric machine 20 related to the problem caused by the fluctuation of the rotation speed Nm will be described here, with reference to Fig. 3. The operating point of the rotary electric machine 20, as determined from the torque Tr and the rotation speed Nm, is within these operating regions.

The first quadrant is an operating region in which the torque Tr generated by the rotary electric machine 20 is positive and the rotation speed Nm of the rotor 22 is positive. When the operating point is in the first quadrant, the rotary electric machine 20 functions as an electric motor and generates a powering torque.

The fourth quadrant is an operating region in which the torque Tr generated by the rotary electric machine 20 is negative and the rotation speed Nm of the rotor 22 is positive. When the operating point is in the fourth quadrant, the rotary electric machine 20 functions as a generator and generates a regenerative torque.

The third quadrant is an operating region in which the torque Tr generated by the rotary electric machine 20 is negative and the rotation speed Nm of the rotor 22 is negative. When the operating point is in the third quadrant, the rotary electric machine 20 functions as an electric motor and generates a powering torque.

The second quadrant is an operating region in which the torque Tr generated by the rotary electric machine 20 is positive and the rotation speed Nm of the rotor 22 is negative. When the operating point is in the second quadrant, the rotary electric machine 20 functions as a generator and generates a regenerative torque.

Returning to the explanation of Fig. 2, after time t2, the operating point is in the second quadrant during a period when the rotational speed Nm occurring during fluctuation becomes negative, and the rotary electric machine 20 tries to generate a regenerative torque. However, since the storage battery 31 is in a fully charged state, it is not possible to generate the regenerative torque. Therefore, the torque Tr generated by the rotary electric machine 20 is not maintained at the target creep torque Ttgt, and is significantly less than the target creep torque Ttgt.

On the other hand, during a period where the rotation speed Nm becomes positive accompanied by fluctuation, the operating point is in the first quadrant and the rotary electric machine 20 functions as an electric motor. Therefore, the generated torque of the rotary electric machine 20 is not limited and is controlled to the target creep torque Ttgt.

The torque Tr generated by the rotary electric machine 20 thus fluctuates greatly, due to alternation of periods in which the rotation speed Nm of the rotor 22 becomes positive and periods in which the rotation speed Nm becomes negative. This torque fluctuation increases the fluctuation of the rotation speed Nm caused by the torsion of the drive shaft 24, and may cause deterioration of drivability of the vehicle. In particular, large fluctuations in the rotation speed Nm that occur while the vehicle is halted tend to lead to a significant deterioration in drivability.

If the amount of fluctuation of the rotation speed Nm becomes large, the problem may arise that the controllability of the generated torque of the rotary electric machine 20, based on the detection values from of the rotation angle sensor 43, becomes lowered. Furthermore, the target creep torque Ttgt may begin to become gradually reduced, as illustrated at time t3 in Fig. 2.

In the present embodiment, the process shown in Fig. 4 is executed by the EV-ECU 50 in order to suppress deterioration of drivability. Fig. 4 is a flowchart showing the procedure of this process.

In step S10, a determination is made as to whether the vehicle 10 is in the starting state. In the present embodiment, it is determined that the vehicle is in the starting state if three conditions are satisfied, i.e., a first condition which is that the shift position detected by the shift position sensor 42 is in the D range, a second condition which is that the brake stroke Sb is equal to or less than the brake threshold value Sth, and a third condition which is that the accelerator pedal is not being operated by the driver. With respect to the third condition, it may be determined that the accelerator pedal is not being operated if it is detected that the accelerator stroke Sacc is 0 (zero).

If a positive decision is made in step S10, the process proceeds to step S11, and a determination is made as to whether the SOC of the storage battery 31, acquired from the battery ECU 32, is equal to or higher than the charging threshold value S$\alpha$ (for example, 95%). The process of step S11 serves to determine whether the storage battery 31 is in a fully charged state. In this embodiment, the process of step S11 corresponds to a state determination unit.

If a negative decision is made in step S11, it is determined that the storage battery 31 is not fully charged, and the process proceeds to step S12. In step S12, execution of regenerative drive control is enabled. In this case, the limit torque Tlimit is set to a value sufficiently greater than 0.

In step S13, the target creep torque Ttgt is gradually increased from 0 to a first prescribed torque T$\alpha$ and set. In the present embodiment, the target creep torque Ttgt is gradually increased at a constant rate over a predetermined period $\Delta$t, from 0 to the first prescribed torque T$\alpha$.

On the other hand, if a positive decision is made in step S11, it is determined that the storage battery 31 is in a fully charged state, and the process proceeds to step S14. In step S14, execution of regenerative drive control is prevented. In this case, the limit torque Tlimit is set to 0.

In step S15, a value of the target creep torque Ttgt is gradually increased from 0 to a second prescribed torque T$\beta$ and set. The second prescribed torque T$\beta$ has a smaller value than the first prescribed torque T$\alpha$. In the present embodiment, the target creep torque Ttgt is gradually increased at a constant rate from 0 to the second prescribed torque T$\beta$ over the prescribed period $\Delta$t. It should be noted that it is not essential for the gradual increase of the target creep torque Ttgt to be set at a constant rate. In the present embodiment, the processes of steps S13 and S15 correspond to a target value setting unit.

With the process of step S15, the rate of increase of the target creep torque Ttgt is made lower than in the case where it is determined that the storage battery 31 is not in the fully charged state. As a result, the vibration generated due to the torsion of the drive shaft 24 can be reduced, and the amount of fluctuation of the rotation speed Nm of the rotor 22 can be reduced. It is thereby made possible to suppress deterioration of drivability, and protect the storage battery 31 from overcharging.

Furthermore, with the process of step S15, the target creep torque Ttgt is set to the second prescribed torque T$\beta$ which is smaller than the first prescribed torque T$\alpha$. As a result, it is possible to reduce the amount of fluctuation of the torque Tr generated by the rotary electric machine 20, when the rotation speed Nm of the rotor 22 alternates between periods in which the speed becomes positive and periods in which the speed becomes negative. As a result, the amount of fluctuation of the rotation speed Nm can be reduced, and decrease in drivability can be suppressed.

<Modified Example of First Embodiment>

The problem of reduced drivability may also occur when the shift position is set to the R range. When the R range is set, the torque generated by the rotary electric machine 20 becomes negative. In this case, during the periods when the rotation speed Nm occurring during fluctuation becomes positive, the operating point is in the fourth quadrant, so that the rotary electric machine 20 tries to generate a regenerative torque. However, since the storage battery 31 is in a fully charged state, it is not possible to generate the regenerative torque. Therefore, the generated torque Tr of the rotary electric machine 20 will not be maintained at the target creep torque Ttgt, and becomes significantly lower than the target creep torque Ttgt.

On the other hand, during the periods in which the rotational speed Nm occurring during fluctuation becomes negative, the operating point is in the third quadrant, and the rotary electric machine 20 functions as an electric motor. In that case the torque generated by the rotary electric machine 20 is not limited, and does not become significantly lower than the target creep torque Ttgt.

The torque Tr generated by the rotary electric machine 20 will fluctuate greatly due to these periods in which the rotation speed Nm of the rotor 22 becomes alternately positive and negative. Due to this torque variation, drivability may deteriorate.

In order to suppress deterioration of drivability that may occur in the case of the R range, the first condition in step S10 of Fig. 4 can made that the shift position, detected by the shift position sensor 42, is the R range.

It should be noted that it would be equally possible, in step S15, to either reduce only the rate of increase of the target creep torque Ttgt, or to reduce only the absolute value (prescribed torque value) alone of the target creep torque Ttgt.

If only the absolute value of the target creep torque Ttgt is reduced in step S15, the process of step S15 can consist of increasing the target creep torque Ttgt from 0 to the second prescribed torque Tβ at the same rate as the rate of increase of the target creep torque Ttgt in step S13.

Furthermore, if only the rate of increase of the target creep torque Ttgt is reduced in step S15, the process of step S15 can consist of increasing the target creep torque Ttgt from 0 to the first prescribed torque Tα at a rate that is lower than the rate of increase of the target creep torque Ttgt in step S13.

<Second Embodiment>

Hereinafter, a second embodiment will be described, emphasizing differences from the first embodiment. This embodiment differs with respect to the method of setting the second prescribed torque Tβ.

Fig. 5 shows a processing procedure executed by the EV-ECU 50 of this embodiment. In Fig. 5, processing which is identical to processing shown in Fig. 4 is designated by the same reference numerals, for convenience.

After the process of step S14 is completed, the process proceeds to step S16, in which the higher the SOC of the storage battery 31, the smaller is made the second prescribed torque Tβ. After the process of step S16 is completed, the process proceeds to step S15.

With the process of step S16, the higher the SOC, the smaller becomes the value of the second prescribed torque Tβ, and the lower the rate of increase of the target creep torque Ttgt. As a result, it is possible to further suppress deterioration of drivability when the storage battery 31 is in a fully charged state.

It should be noted that it would be equally possible, in step S16, for the parameter that is made variable in accordance with the SOC to either be only the rate of increase of the target creep torque Ttgt, or to be only the absolute value (prescribed torque value) of the target creep torque Ttgt.

<Third Embodiment>

Hereinafter, a third embodiment will be described with particular emphasis on the differences from the first embodiment. In the present embodiment, as shown in Fig. 6, when the storage battery 31 is determined to be in a fully charged state, the timing at which the target creep torque Ttgt starts to increase from 0 is advanced, relative to the timing when it is determined that the storage battery 31 is not in a fully charged state.

Fig. 6(a) shows transitions of the brake stroke Sb, and Fig. 6(b) shows transitions of the target creep torque Ttgt. In Fig. 6(b), the alternate long and short dash line shows transitions of the target creep torque Ttgt when it is determined that the storage battery 31 is not in the fully charged state, while the solid line shows the transitions when it is determined that the storage battery 31 is in the fully charged state.

If a negative decision is made in step S11 of Fig. 4, the EV-ECU 50 sets the brake threshold value Sth to a first threshold value S1, while if a positive decision is made in step S11, the brake threshold value Sth is set to a second threshold value S2 which is higher than the first threshold value S1. Therefore, as shown in Fig. 6, if the battery is fully charged, the timing t1 at which a positive decision is made in step S10 will occur earlier than the timing t2 at which the positive decision is made in step S10 if it is determined that the battery is not fully charged. As a result, deterioration of drivability can be suppressed.

<Fourth Embodiment>

Hereinafter, a fourth embodiment will be described with particular emphasis on the differences from the first embodiment. In the first embodiment, the target creep torque Ttgt is gradually increased from 0 to the prescribed torque when creep travel of the vehicle 10 is started. In the present embodiment, when the vehicle 10 is in a halted state and is started by depressing the accelerator pedal, the target torque Trq* (corresponding to the "target starting torque") is gradually increased from 0 to the prescribed torque. In this embodiment, the prescribed torque is calculated based on the accelerator stroke Sacc. The EV-ECU 50 performs switching control of the inverter 30 for setting the torque generated by the rotary electric machine 20 to the target torque Trq*.

The EV-ECU 50 executes the process shown in Fig. 7 in order to suppress decrease in drivability when the vehicle 10 is started.

In step S20, a determination is made as to whether the accelerator pedal is being operated (that is, the accelerator pedal is being depressed) while the vehicle 10 is in the halted state. Specifically, it may be determined that the accelerator pedal is being operated if the accelerator stroke Sacc is greater than 0.

If a positive decision is made in step S20, the process proceeds to step S21, and in a similar manner to step S11, a determination is made as to whether the SOC of the storage battery 31, acquired from the battery ECU 32, is equal to or higher than the charging threshold value $S\alpha$.

If a negative decision is made in step S21, the process proceeds to step S22, and execution of regenerative drive control is enabled in the same manner as in step S12.

In step S23, the target torque Trq* is gradually increased from 0 to a first prescribed torque TA and set. In the present embodiment, the target torque Trq* is gradually increased at a constant rate over a predetermined period $\Delta t$, from 0 to the first prescribed torque TA. Here, the first prescribed torque TA is calculated based on the accelerator stroke Sacc. The length of the predetermined period $\Delta t$ for which the target torque Trq* is gradually increased may be the same as or different from the length of the predetermined period $\Delta t$ of the first embodiment.

On the other hand, if a positive decision is made in step S21, the process proceeds to step S24, in which in a similar manner to step S14, execution of regenerative drive control is inhibited.

In step S25, the target torque Trq* is gradually increased from 0 to a second prescribed torque TB, and set. The second prescribed torque TB is made smaller than the first prescribed torque TA. In the present embodiment, the target torque Trq* is gradually increased at a constant rate from 0 to the second prescribed torque TB over a predetermined period $\Delta t$. However, it is not essential to increase the target torque Trq* at a constant rate in the processes of steps S23 and S25. In the present embodiment, the processes of steps S23 and S25 correspond to a target value setting unit.

With the present embodiment according to the process of step S25, when the storage battery 31 is determined to be in a fully charged state, the rate of increase of the target torque Trq* is lower than when it is determined that the storage battery 31 is not in the fully charged state. As a result, vibration caused by the torsion of the drive shaft 24 can be reduced, and the amount of fluctuation of the rotation speed Nm of the rotor 22 can be reduced. It is thereby possible to suppress deterioration of drivability while protecting the storage battery 31 from overcharging. Furthermore, according to the process of step S25, the target torque Trq* is set to a second prescribed torque TB which is smaller than the first prescribed torque TA. As a result, it is possible to reduce the amount of fluctuation of the torque generated by the rotary electric machine 20, when the rotation speed Nm of the rotor 22 alternates between periods in which the speed becomes positive and periods in which the speed becomes negative. Hence, the amount of fluctuation of the rotation speed Nm can be reduced, and deterioration of drivability can be suppressed.

< Modified Example of Fourth Embodiment>

A process may be added between step S24 and step S25 in Fig. 7 whereby the higher the SOC of the battery 31, the smaller is made the second prescribed torque TB.

<Fifth Embodiment>

Hereinafter, a fifth embodiment will be described with reference to the drawings, focusing on the differences from the first embodiment. In the present embodiment, the determination as whether the storage battery 31 is in a state whereby charging of the storage battery 31 is limited is made based on the battery temperature Tbat of the storage battery 31, instead of the SOC.

Fig. 8 shows a processing procedure executed by the EV-ECU 50. In Fig. 8, processing which is the same as that shown in Fig. 5 is designated by the same reference numerals, for convenience.

If a positive decision is made in step S10, the process proceeds to step S17 in which a determination is made as to whether the battery temperature Tbat acquired from the battery ECU32 attains a temperature threshold value Tth or more. The process of step S17 serves to determine whether the storage battery 31 is in a state whereby charging of the storage battery 31 is limited. That is, when the storage battery 31 is in a high temperature range where the battery temperature is equal to or higher than a predetermined temperature, the higher the battery temperature, the smaller the charging power limit value Win tends to be. For example, the temperature threshold Tth is set to a higher value than the prescribed temperature. In this embodiment, the process of step S17 corresponds to a state determination unit.

If it is determined in step S17 that the battery temperature Tbat is lower than the temperature threshold value Tth, it is determined that the power storage device 31 is in a state whereby charging of the storage battery 31 is not limited, and the process proceeds to step S12.

On the other hand, if the battery temperature Tbat is determined in step S17 to be at the temperature threshold value Tth or higher, then it is determined that the power storage device 31 is in the state whereby the state of charge of the battery 31 is limited, and the process proceeds to step S14.

After the process of step S14 is completed, the process proceeds to step S18, in which the higher the battery temperature Tbat the smaller is made the second prescribed torque $T\beta$. After the process of step S18 is completed, the process proceeds to step S15.

With the present embodiment according to the process of step S18, the higher the battery temperature Tbat, the smaller the value of the second prescribed torque $T\beta$, and the lower the rate of increase of the target creep torque Ttgt. As a result, it is possible to further suppress decrease in drivability when the power storage device 31 is in a state whereby charging of the storage battery 31 is limited.

It should be noted that it would be equally possible for the parameter that is variable according to the battery temperature Tbat to either be only the rate of increase of the target creep torque Ttgt, or only the absolute value (prescribed torque value) of Ttgt.

The present embodiment described above can provide the same effects as the first embodiment.

<Modified Example of Fifth Embodiment>

The process of step S18 in Fig. 8 may be omitted.

The processing of steps S20, S23 and S25 of Fig. 7 may be provided instead of the processing of steps S10, S13, and S15 of Fig. 8. In this case, the process of step S18 will consist of reducing the second prescribed torque TB in accordance with increase of the battery temperature Tbat.

In the same manner as for the third embodiment it would be possible, when it is determined that the battery temperature Tbat is equal to or higher than the temperature threshold Tth, for the EV-ECU 50 to advance the timing at which the target creep torque Ttgt begins to increase from 0, relative to the timing when Tbat is determined to be below Tth.

<Sixth Embodiment>

Hereinafter, a sixth embodiment will be described with particular emphasis on the differences from the first embodiment. In the present embodiment, the method of reducing the rate of increase of the target creep torque Ttgt is changed.

Fig. 9 shows the overall configuration of the in-vehicle system according to the present embodiment. In Fig. 9, parts of the configuration which are the same as those shown in Fig. 1 above are designated by the same reference numerals as in Fig. 1, for convenience.

The vehicle 10 includes a current sensor 44, which detects the current (phase current) flowing through the stator winding 21. The detected value from the current sensor 44 is input to the EV-ECU 50.

Fig. 10 shows a block diagram of the processing performed by the EV-ECU 50.

The filter unit 61 applies a filter process to the values of the first prescribed torque $T\alpha$ (target creep torque Ttgt), and calculates the post-filter torque Tf. In the present embodiment, the first prescribed torque $T\alpha$ increases in a stepwise manner, for example, when the vehicle starts to creep. The filter unit 61 is described in detail hereinafter.

The target current setting unit 62 sets the d-axis target current Idtgt and the q-axis target current Iqtgt that are to be passed through the stator winding 21, based on the calculated post-filter torque Tf. The target currents Idtgt and Iqtgt may be set based, for example, on map information that relates values of the post-filter torque and the target currents Idtgt, Iqtgt to one another.

The current control unit 63 calculates the d-axis voltage Vdtgt to be applied to the stator winding 21, as an operation amount for feedback-controlling the value of d-axis current Idr flowing through the stator winding 21 to the d-axis target current value Idtgt. In this embodiment, proportional integral feedback control is used. Hence, the current control unit 63 calculates the d-axis current deviation $\Delta Id$ by subtracting the d-axis current Idr from the d-axis target current Idtgt, and uses the relationship "$Vdtgt = Kp \times \Delta Id + Ki \times \Delta Id$" to calculate the d-axis voltage Vdtgt. Here, Kp is a proportional gain and Ki is an integral gain. The d-axis current Idr may be calculated based on the current value detected by the current sensor 44 and the electrical angle $\theta e$ detected by the rotation angle sensor 43.

Furthermore, the current control unit 63 calculates the q-axis voltage Vqtgt to be applied to the stator winding 21 as an operation amount for feedback-controlling the value of q-axis current Iqr flowing through the stator winding 21 to the value of the q-axis target current value Iqtgt. Specifically, the current control unit 63 calculates the q-axis current deviation $\Delta Iq$ by subtracting the q-axis current Iqr from the q-axis target current Iqtgt, and uses the relationship "$Vqtgt = Kp \times \Delta Iq + Ki \times \Delta Iq$" to calculate the q-axis voltage Vqtgt. The q-axis current Iqr may be calculated based on the current value detected by the current sensor 44 and the electrical angle $\theta e$ detected by the rotation angle sensor 43.

Based on the calculated d, q-axis voltages Vdtgt, Vqtgt and the electric angle $\theta e$, the three-phase conversion unit 64 converts the d, q-axis voltages Vdtgt, Vqtgt of the rotating coordinate system (dq coordinate system) to U, V, W phase voltages Vu, Vv, Vw in a fixed corrected system (UVW coordinate system). The EV-ECU 50 controls the generated torque of the rotary electric machine 20 to the first prescribed torque Tα by performing switching control of the inverter 30 based on the calculated U, V, W phase voltages Vu, Vv, Vw.

A description will next be given of the filter unit 61. In the present embodiment, the filter transmission characteristic I (s) of the filter unit 61 is represented by the following equation (eq1).

[Formula 1]

$$I(s) = \frac{s^2 + 2\xi_p \cdot \omega_p \cdot s + \omega_p^2}{s^2 + 2\xi_m \cdot \omega_p \cdot s + \omega_p^2} \quad \ldots (eq1)$$

In equation (eq1), s indicates a resonance operator, ξp indicates the attenuation coefficient of the drive system from the rotary electric machine 20 to the drive wheel 25 via the transmission 23 and the drive shaft 24, and cop indicates the resonance angular frequency of the drive system. The attenuation coefficient ξp of the drive system and the resonance angular frequency cop are parameters constituting second-order lag elements. In the present embodiment, the attenuation coefficient ξp of the drive system is set to a value larger than 0 and less than 1 (for example, 0.1 to 0.3). For the filter transmission characteristics of the above equation (eq1), see for example JP 2001-45613A (published unexamined patent application).

In the present disclosure, ξm of the above equation (eq1) is referred to as a prescribed attenuation coefficient. The EV-ECU 50 changes the prescribed attenuation coefficient ξm in accordance with whether the power storage device is in a state whereby charging of the power storage device is limited.

Fig. 11 shows a process procedure executed by the EV-ECU 50. In Fig. 11, processing which is the same as that shown in Fig. 5 is designated by the same reference numerals as in Fig. 5, for convenience.

If a negative decision is made in step S11, the process proceeds to step S30 via step S12. In step S30, the defined attenuation coefficient ξm of the filter transmission characteristic I (s) is set to the first attenuation coefficient ξ1. Here, the first attenuation coefficient ξ1 can be set to a value equal to or higher than the attenuation coefficient ξp of the drive system, for example. If the first attenuation coefficient ξ1 is set to the same value as the attenuation coefficient ξp of the drive system, the filter transmission characteristic I (s) becomes 1.

On the other hand, if a positive decision is made in step S11, the process proceeds to step S31 via step S14. In step S31, the prescribed attenuation coefficient ξm is set to the second attenuation coefficient ξ2, which is larger than the first attenuation coefficient ξ1.

With the method of setting the attenuation coefficient described above, when it is determined that the storage battery 31 is in a fully charged state, the rate of increase of the target creep torque Ttgt is decreased by comparison with the case where it is determined that the storage battery 31 is not in a fully charged state. As a result, the vibration generated due to the torsion of the drive shaft 24 can be reduced, and the amount of fluctuation of the rotation speed Nm of the rotor 22 can be reduced. It is thereby possible to suppress deterioration of drivability while protecting the storage battery 31 from overcharging.

<Modified Examples of the Sixth Embodiment>

The process of step S11 of Fig. 11 may be changed to the process of step S17 of Fig. 8.

The process of step S10 in Fig. 11 may be changed to the process of step S20 of Fig. 7.

<Seventh Embodiment>

Hereinafter, a seventh embodiment will be described with reference to the drawings, focusing on the differences from the 6th embodiment. In the present embodiment, the method of reducing the rate of increase of the target creep torque Ttgt is changed.

Fig. 12 shows a processing procedure executed by the EV-ECU 50. In Fig. 12, parts of the processing which are the same as that shown in Fig. 11 are designated by the same reference numerals, for convenience.

If a negative decision is made in step S11, the process proceeds to step S32 via step S12. In step S32, the proportional gain Kp used by the current control unit 63 is set to the first proportional gain K1p, and the integrated gain Ki is set to the first integrated gain K1i.

On the other hand, if a positive decision is made in step S11, the process proceeds to step S33 via step S14. In step S33, the proportional gain Kp used in the current control unit 63 is set to the second proportional gain K2p, which smaller than the first proportional gain K1p, and the integrated gain Ki is set to the second integrated gain K2i, which is smaller than the first integrated gain K1i.

The above embodiment can provide the same effects as those of the sixth embodiment.

<Other Embodiments>

Each of the above embodiments may be modified as follows.

In the procedure shown in Fig. 11 of the fifth embodiment, the process of step S32 of Fig. 12 may be executed together with the process of step S30. Furthermore, in the procedure shown in Fig. 11, the process of step S33 of Fig. 12 may be executed together with the process of step S31.

In the fourth embodiment, as a method of reducing the rate of increase of the target torque Trq, a filter process (for example, a first-order lag filter element) may be applied to the accelerator stroke Sacc used for calculating the target torque Trq*. Specifically, when the EV-ECU 50 determines that the storage battery 31 is not in the fully charged state, the time constant of the filter processing is set to a first time constant τ1, and when it is determined that the storage battery 31 is in the fully charged state, the time constant of the filter processing is set to a second time constant τ2, which is larger than the first time constant τ1.

The power storage device is not limited to a storage battery, and may be, for example, a large-capacity capacitor.

The inverter 30 and the storage battery 31 may be electrically connected via a DC-DC converter. This DC-DC converter boosts the output voltage of the storage battery 31 and supplies it to the inverter 30, or steps down the voltage from the inverter 30 and supplies it to the storage battery 31.

The vehicle equipped with the control apparatus is not limited to being equipped with only a rotary electric machine as a motive power source, and may be a vehicle equipped with an internal combustion engine in addition to a rotary electric machine as a motive power source.

The controls and techniques described herein may be realized by a dedicated computer configured with a processor and memory, and programmed to perform one or more functions embodied by a computer program. Alternatively, the controls and methods thereof described in the present disclosure may be implemented by a dedicated computer provided by configuring a processor with one or more dedicated hardware logic circuits. Alternatively, the controls and techniques described herein may be implemented by one or more dedicated computers each programmed to perform one or more functions and configured by a combination of a processor and memory and a processor configured with one or more hardware logic circuits. Furthermore, the computer program may be stored in a computer-readable non-transitory tangible recording medium as instructions to be executed by the computer.

The present disclosure has been described based on examples, however it is to be understood that the disclosure is not limited to such examples or structures. The present disclosure also includes various modification, and variations in a range of equivalent that are within a uniform scope. In addition, various combinations and forms, as well as other combinations and forms that include only one element, more, or less, fall within the scope of the present disclosure.

## Claims

1. A vehicle control apparatus (50), for application to a vehicle (10) that is equipped with:

    a power storage device (31);
    an inverter (30) electrically connected to the power storage device;
    a rotary electric machine (20) having a stator winding (21) and a rotor (22), with the stator winding electrically connected to the inverter; and
    a drive shaft (24) that transmits motive power between the rotor and drive wheels (25),
    wherein the vehicle control apparatus comprises:

    a target value setting unit that sets a value of a target starting torque (Ttgt, Trq*) for starting the vehicle, by gradually increasing the value of the target starting torque from 0 to a value of a prescribed torque;
    a control unit that performs switching control of the inverter for controlling the torque generated by the rotary electric machine to the value of the target starting torque;
    a state determination unit that determines whether the power storage device is in a state in which charging is limited; and
    in response to determining that the power storage device is in the state in which the charging is limited, a regeneration limiting unit that, when the rotary electric machine is functioning as a generator, restricts a regeneration torque of the rotary electric machine to a greater degree when the charging of the power storage device is limited than when the charging is not limited,
    wherein when it is determined that the power storage device is in the state in which the charging is limited, the target value setting unit reduces a rate at which the target starting torque increases from 0 to the prescribed torque, by comparison with the rate of increase to the prescribed torque when it is determined that the power storage device is in the state in which the charging is not limited.

2. The vehicle control apparatus according to claim 1, wherein,
    when the target value setting unit determines that the power storage device is in the state in which the charging is limited, the target value setting unit advances the timing at which the target starting torque begins to be increased from 0, by comparison with the timing when it is determined that the power storage device is in the state in which the charging is not limited.

3. The vehicle control apparatus according to claim 1 or 2, wherein,
    when the target value setting unit determines that the power storage device is in the state in which the charging is limited, the target value setting unit reduces the prescribed torque, by comparison with the prescribed torque when it is determined that the power storage device is in the state in which the charging is not limited.

4. The vehicle control apparatus according to any one of claims 1 to 3,

wherein it is determined that the power storage device is in the state in which the charging is limited in response to determining that the power storage device is in a fully charged state, and
wherein it is determined that the power storage device is in the state in which the charging is not limited in response to determining that the power storage device is not in the fully charged state.

5. The vehicle control apparatus according to claim 4, wherein,
when it is determined that the power storage device is in the fully charged state, the target value setting unit reduces the rate of increase of the target starting torque in the case in which the state of charge is high, by comparison with the rate of increase in the case in which the state of charge is low.

6. The vehicle control apparatus according to any one of claims 1 to 3,

wherein it is determined that the power storage device is in the state in which the charging is limited in response to determining that the temperature of the power storage device is equal to or higher than a temperature threshold value, and
wherein it is determined that the power storage device is in the state in which the charging is not limited in response to determining that the temperature of the power storage device is lower than the temperature threshold value.

7. The vehicle control apparatus according to claim 6, wherein,
when it is determined that the temperature of the power storage device is equal to or higher than the temperature threshold value, the target value setting unit reduces the rate of increase of the target starting torque in the case in which the temperature of the power storage device is high, by comparison with the rate of increase in the case in which the temperature of the power storage device is low.

8. A vehicle control apparatus (50) for application to a vehicle (10) that is provided with:

a power storage device (31);
an inverter (30) electrically connected to the power storage device;
a rotary electric machine (20) having a stator winding (21) and a rotor (22), with the stator winding electrically connected to the inverter; and
a drive shaft (24) for transmitting motive power between the rotor and drive wheels (25);
wherein the vehicle control apparatus comprises:

a target value setting unit that sets a value of a target starting torque (Ttgt, Trq*) for starting the vehicle, by gradually increasing the value of the target starting torque from 0 to a value of a prescribed torque;
a control unit that performs switching control of the inverter for controlling the torque generated by the rotary electric machine to the value of the target starting torque;
a state determination unit that determines whether the power storage device is in a state in which charging is limited; and
in response to determining that the power storage device is in the state in which the charging is limited, a regeneration limiting unit that, when the rotary electric machine is functioning as a generator, restricts a regeneration torque of the rotary electric machine to a greater degree when the charging of the power storage device is limited than when the charging is not limited,
wherein, when it is determined that the power storage device is in the state in which the charging is limited, the target value setting unit reduces the prescribed torque, by comparison with the prescribed torque when it is determined that the power storage device is in the state in which the charging is not limited.

9. The vehicle control apparatus according to claim 8,

wherein it is determined that the power storage device is in the state in which the charging is limited in response to determining that the power storage device is in a fully charged state, and
wherein it is determined that the power storage device is in the state in which the charging is not limited in response to determining that the power storage device is not in the fully charged state.

10. The vehicle control apparatus according to claim 9, wherein,
when it is determined that the power storage device is in the fully charged state, the target value setting unit reduces the prescribed torque in the case in which the state of charge is high, by comparison with the prescribed torque in the case in which the state of charge is low.

**11.** The vehicle control apparatus according to claim 8,

wherein it is determined that t the power storage device is in the state in which the charging is limited in response to determining that the temperature of the power storage device is equal to or higher than a temperature threshold value, and

wherein it is determined that the power storage device is in the state in which the charging is not limited in response to determining that the temperature of the power storage device is lower than the temperature threshold value.

**12.** The vehicle control apparatus according to claim 11, wherein,
when the temperature of the power storage device is determined to be equal to or higher than the temperature threshold value, the target value setting unit reduces the prescribed torque of the target starting torque in the case in which the temperature of the power storage device is high, by comparison with the prescribed torque in the case in which the temperature of the power storage device is low.

**13.** The vehicle control apparatus according to any one of claims 1 to 13, wherein,
the target starting torque is a value of a target creep torque (Ttgt) for effecting creep travel of the vehicle.

FIG.1

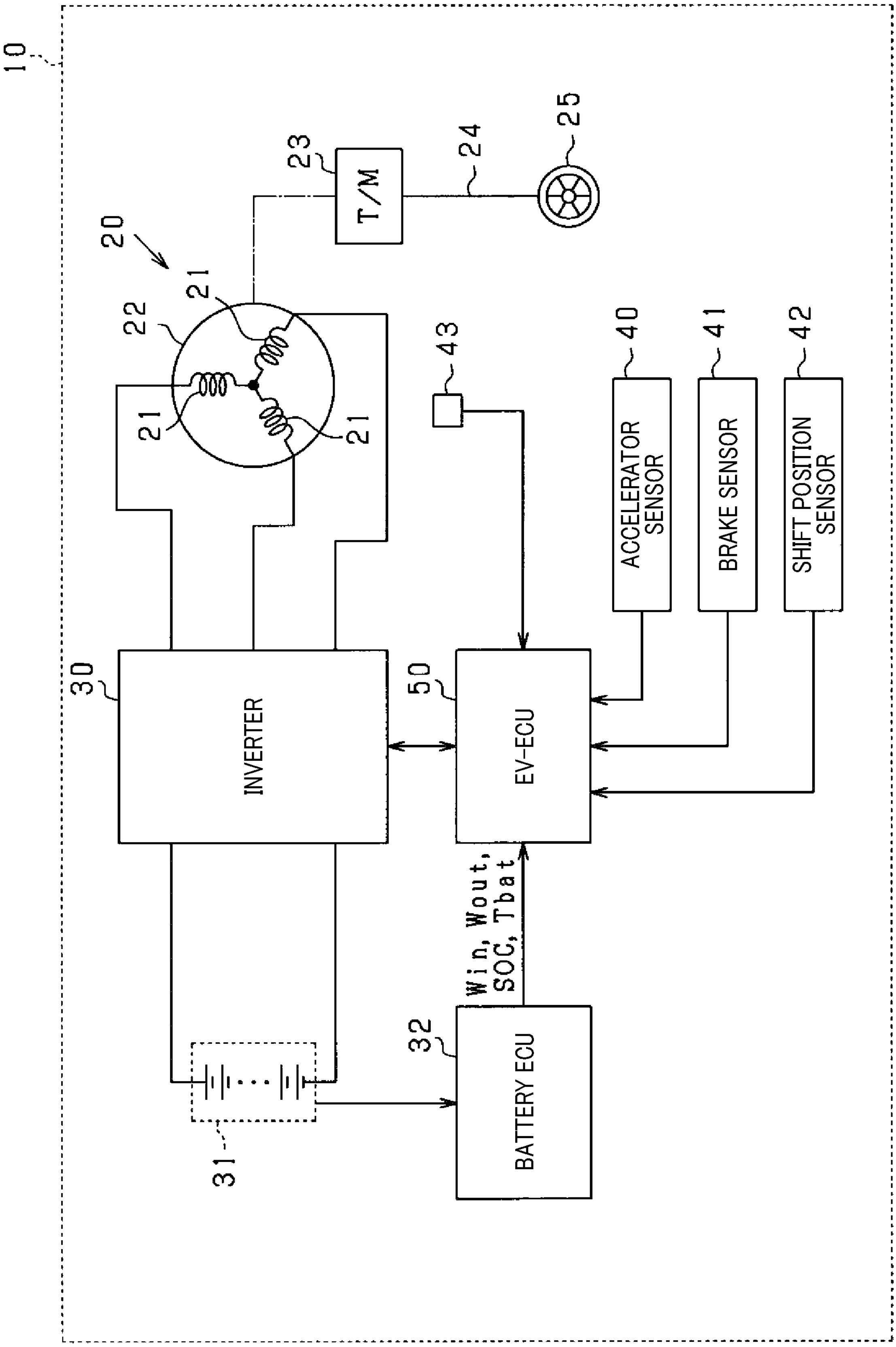
10
20
21
22
23
T/M
24
25
30
INVERTER
31
32
BATTERY ECU
Win, Wout, SOC, Tbat
40
ACCELERATOR SENSOR
41
BRAKE SENSOR
42
SHIFT POSITION SENSOR
43
50
EV-ECU

FIG.2

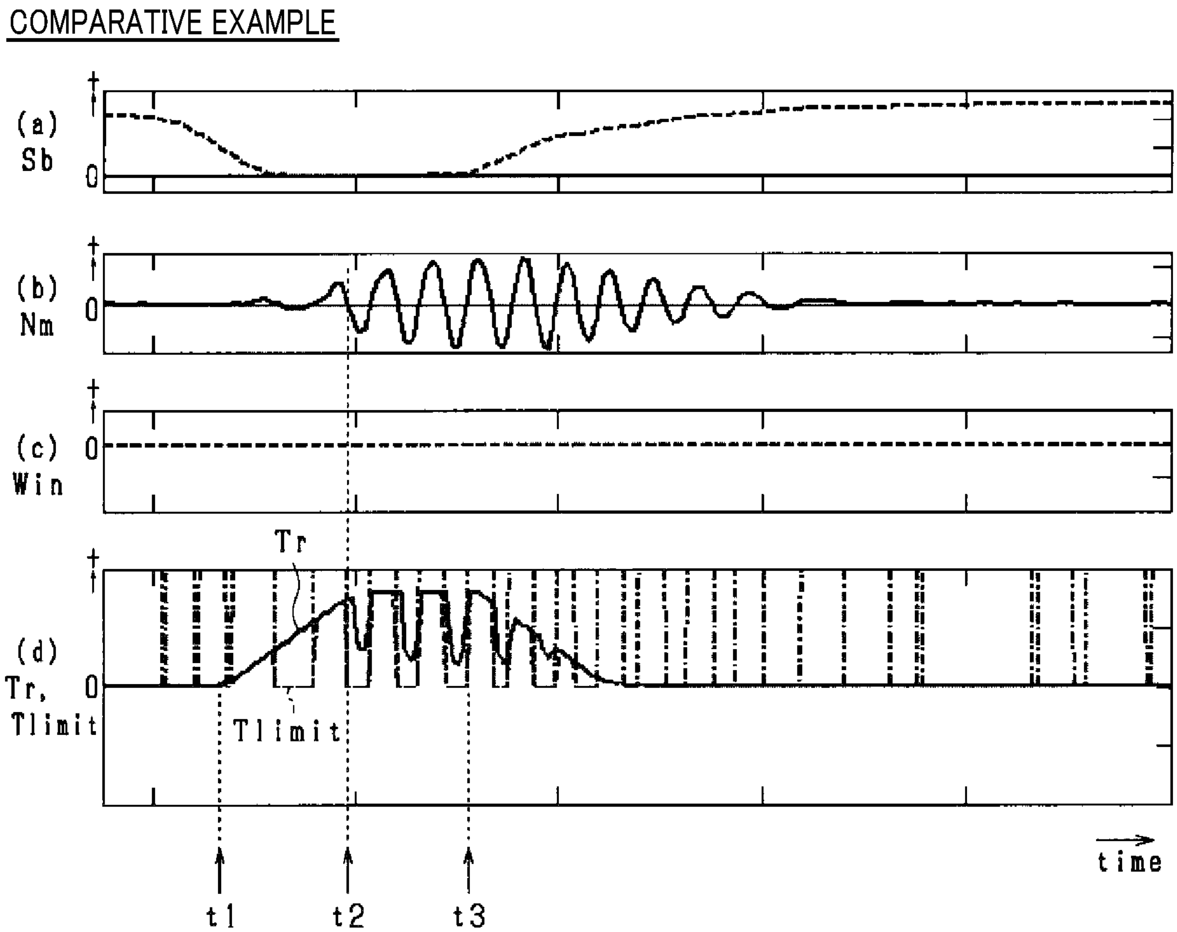
COMPARATIVE EXAMPLE
(a)
Sb
0
(b)
Nm
0
(c)
Win
0
(d)
Tr,
Tlimit
0
Tr
Tlimit
t1
t2
t3
time

FIG.3

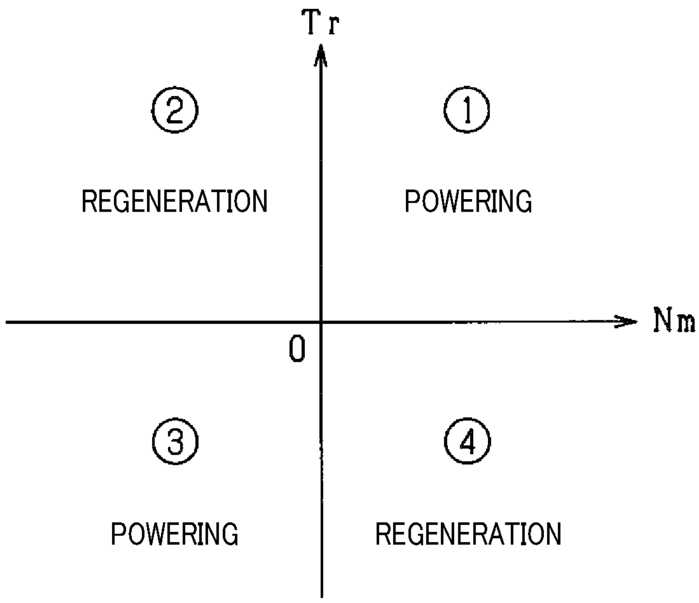
Tr
②
REGENERATION
①
POWERING
Nm
0
③
POWERING
④
REGENERATION

FIG.4

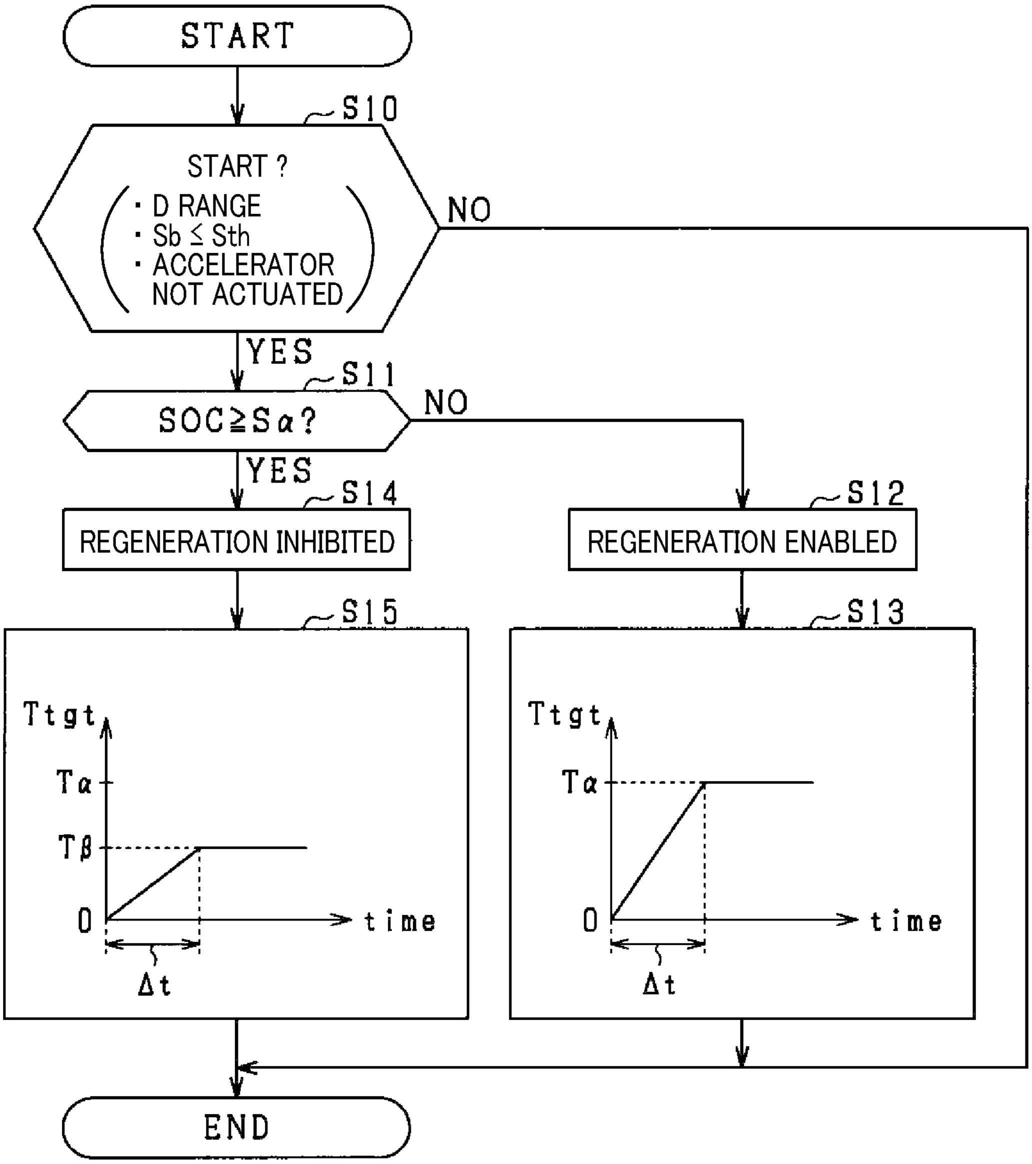
START
S10
START ?
・D RANGE
・Sb ≤ Sth
・ACCELERATOR NOT ACTUATED
NO
YES
S11
SOC≧Sα?
NO
YES
S14
REGENERATION INHIBITED
S12
REGENERATION ENABLED
S15
Ttgt
Tα
Tβ
0
time
Δt
S13
Ttgt
Tα
0
time
Δt
END

FIG.5

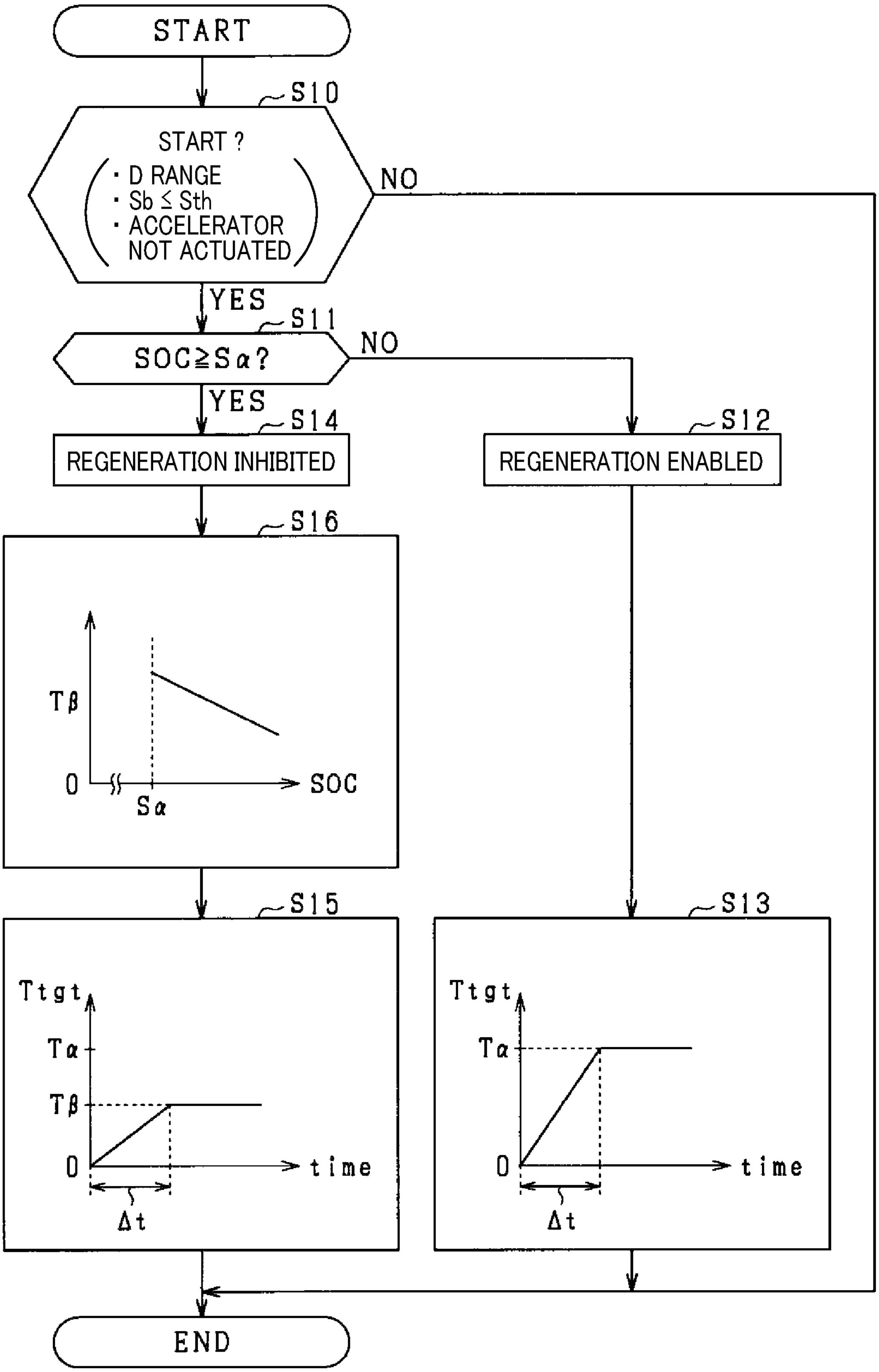
START
S10
START ?
· D RANGE
· Sb ≤ Sth
· ACCELERATOR NOT ACTUATED
NO
YES
S11
SOC≧Sα?
NO
YES
S14
REGENERATION INHIBITED
S12
REGENERATION ENABLED
S16
Tβ
0
Sα
SOC
S15
Ttgt
Tα
Tβ
0
time
Δt
S13
Ttgt
Tα
0
time
Δt
END

FIG.6

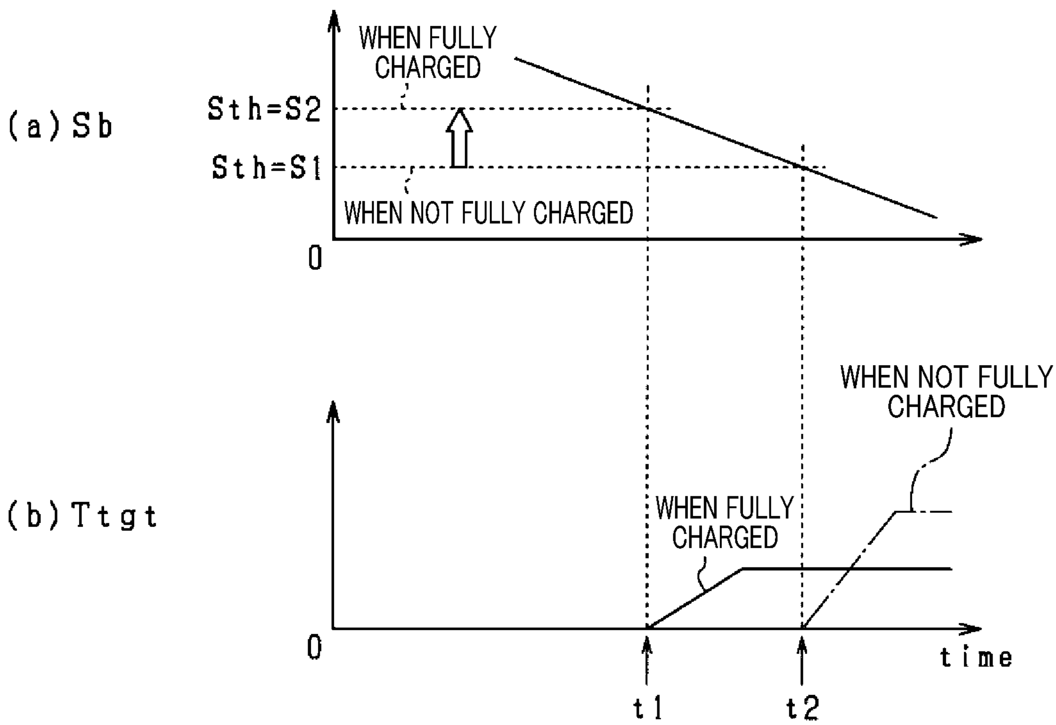
(a) Sb
Sth=S2
Sth=S1
WHEN FULLY CHARGED
WHEN NOT FULLY CHARGED
0
(b) Ttgt
WHEN NOT FULLY CHARGED
WHEN FULLY CHARGED
0
time
t1
t2

FIG.7

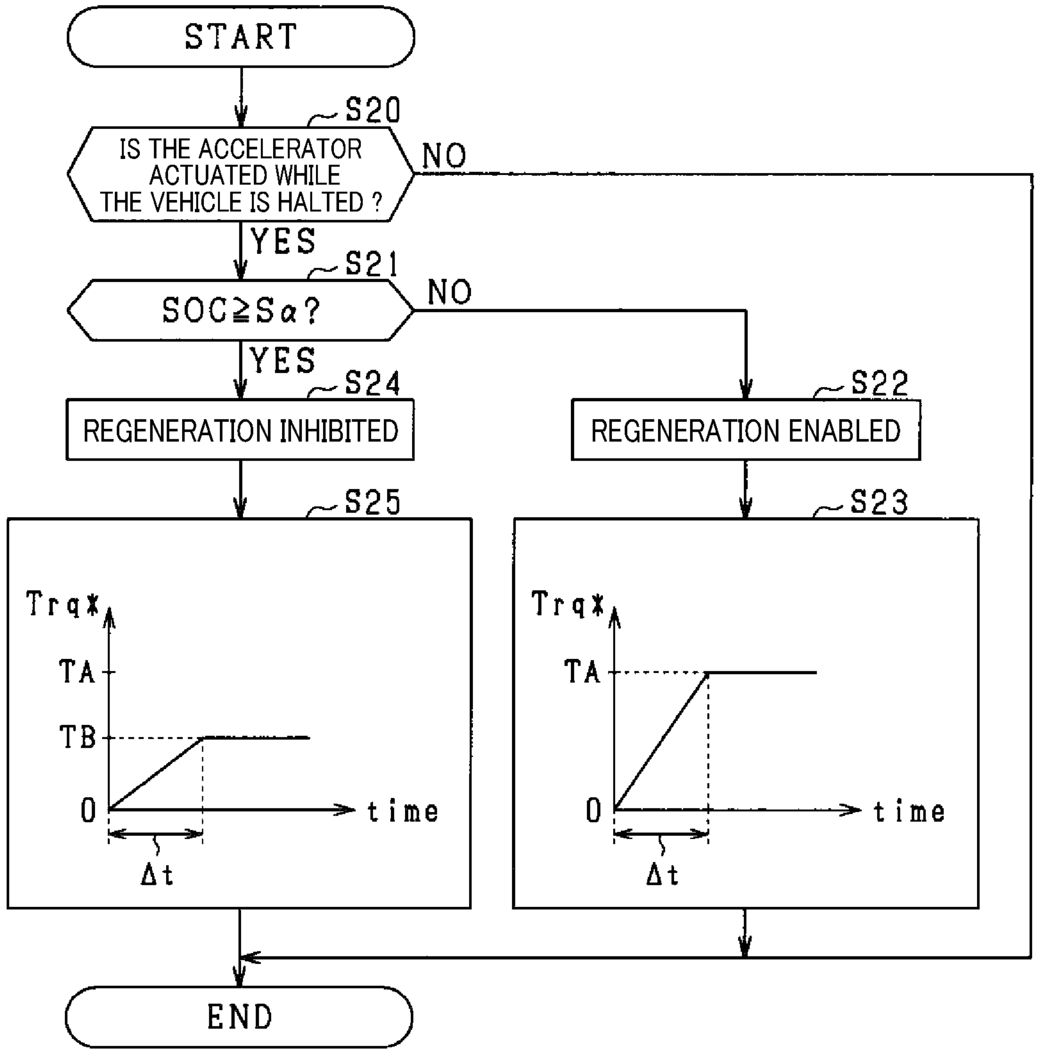
START
S20
IS THE ACCELERATOR ACTUATED WHILE THE VEHICLE IS HALTED ?
NO
YES
S21
SOC≧Sα?
NO
YES
S24
REGENERATION INHIBITED
S22
REGENERATION ENABLED
S25
Trq*
TA
TB
0
time
Δt
S23
Trq*
TA
0
time
Δt
END

FIG.8

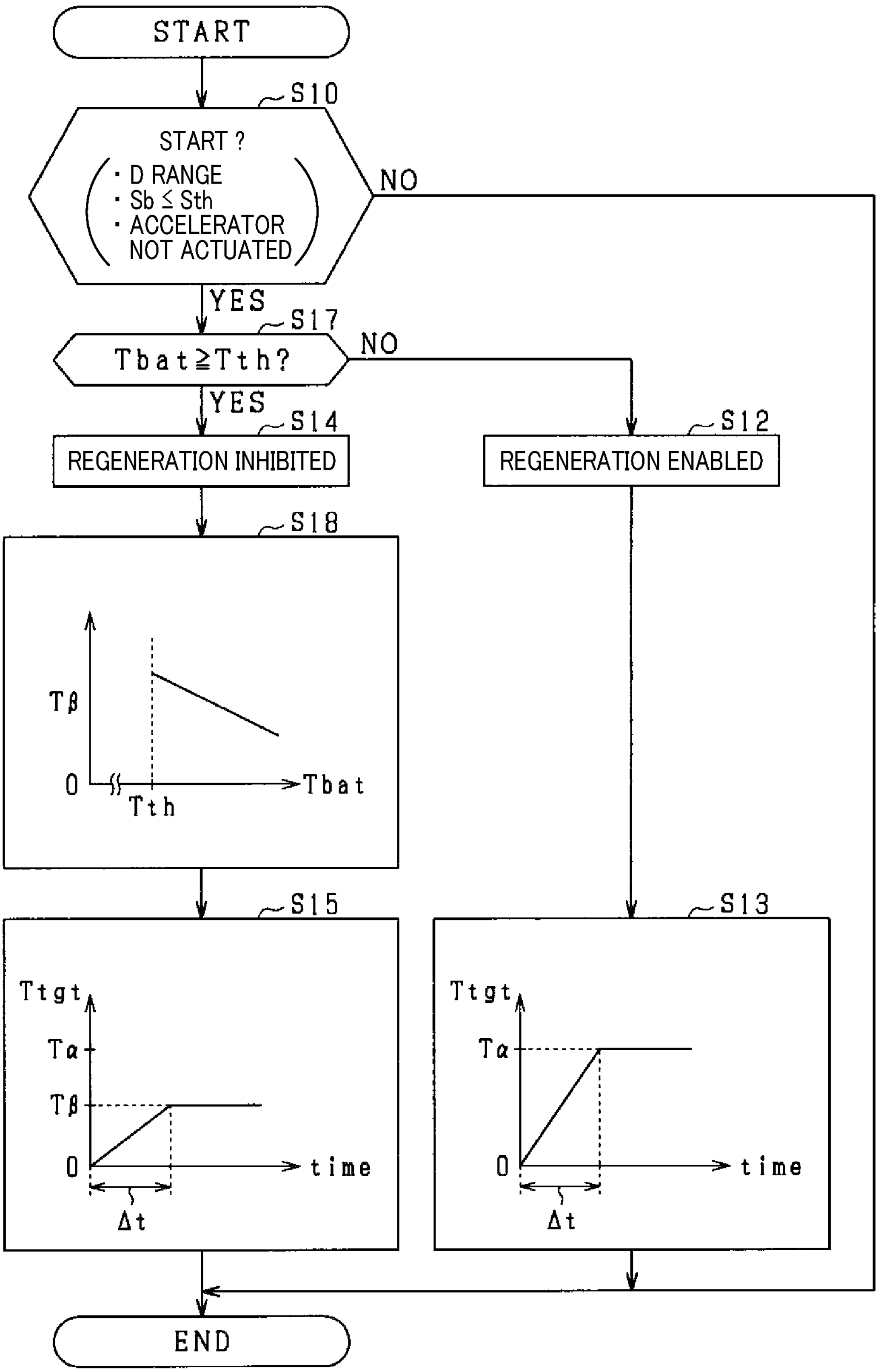
START
S10
START ?
・D RANGE
・Sb ≦ Sth
・ACCELERATOR NOT ACTUATED
NO
YES
S17
Tbat≧Tth?
NO
YES
S14
REGENERATION INHIBITED
S12
REGENERATION ENABLED
S18
Tβ
0
Tth
Tbat
S15
Ttgt
Tα
Tβ
0
time
Δt
S13
Ttgt
Tα
0
time
Δt
END

FIG.9

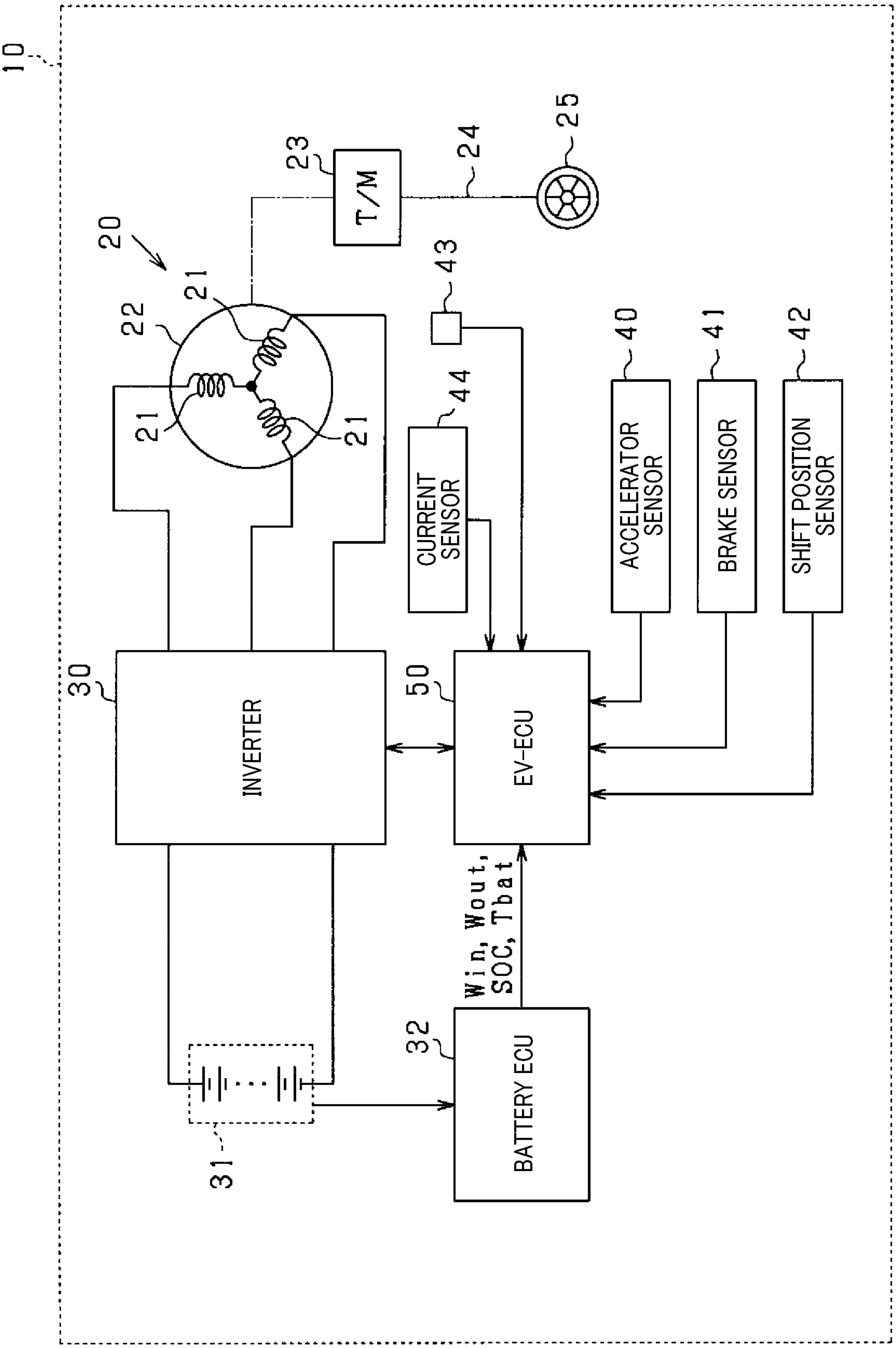
10
20
21
22
23
T/M
24
25
43
44
CURRENT SENSOR
40
ACCELERATOR SENSOR
41
BRAKE SENSOR
42
SHIFT POSITION SENSOR
30
INVERTER
50
EV-ECU
Win, Wout, SOC, Tbat
32
BATTERY ECU
31

FIG.10

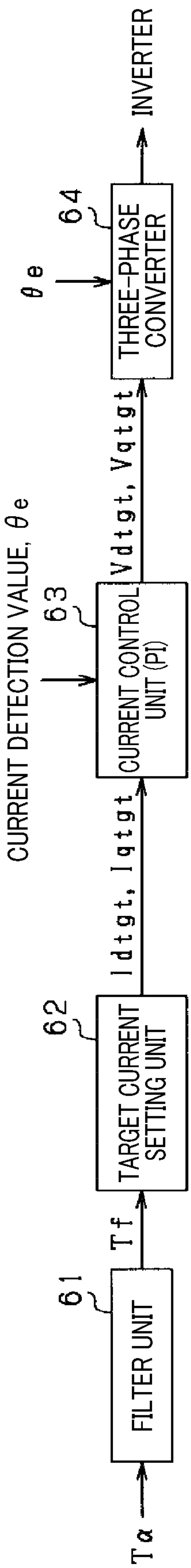
Tα
FILTER UNIT
61
Tf
TARGET CURRENT SETTING UNIT
62
Idtgt, Iqtgt
CURRENT DETECTION VALUE, θe
CURRENT CONTROL UNIT (PI)
63
Vdtgt, Vqtgt
θe
THREE-PHASE CONVERTER
64
INVERTER

FIG.11

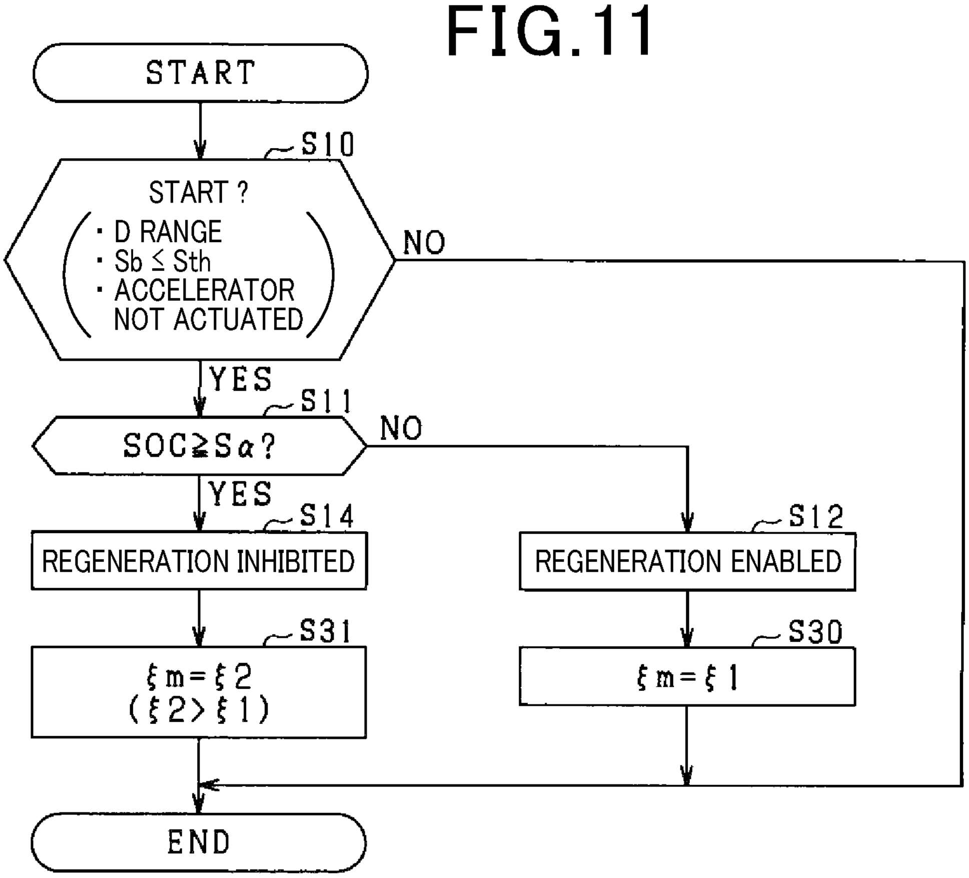
START
S10
START ?
· D RANGE
· Sb ≤ Sth
· ACCELERATOR NOT ACTUATED
NO
YES
S11
SOC≧Sα?
NO
YES
S14
REGENERATION INHIBITED
S12
REGENERATION ENABLED
S31
ξm=ξ2
(ξ2>ξ1)
S30
ξm=ξ1
END

FIG.12

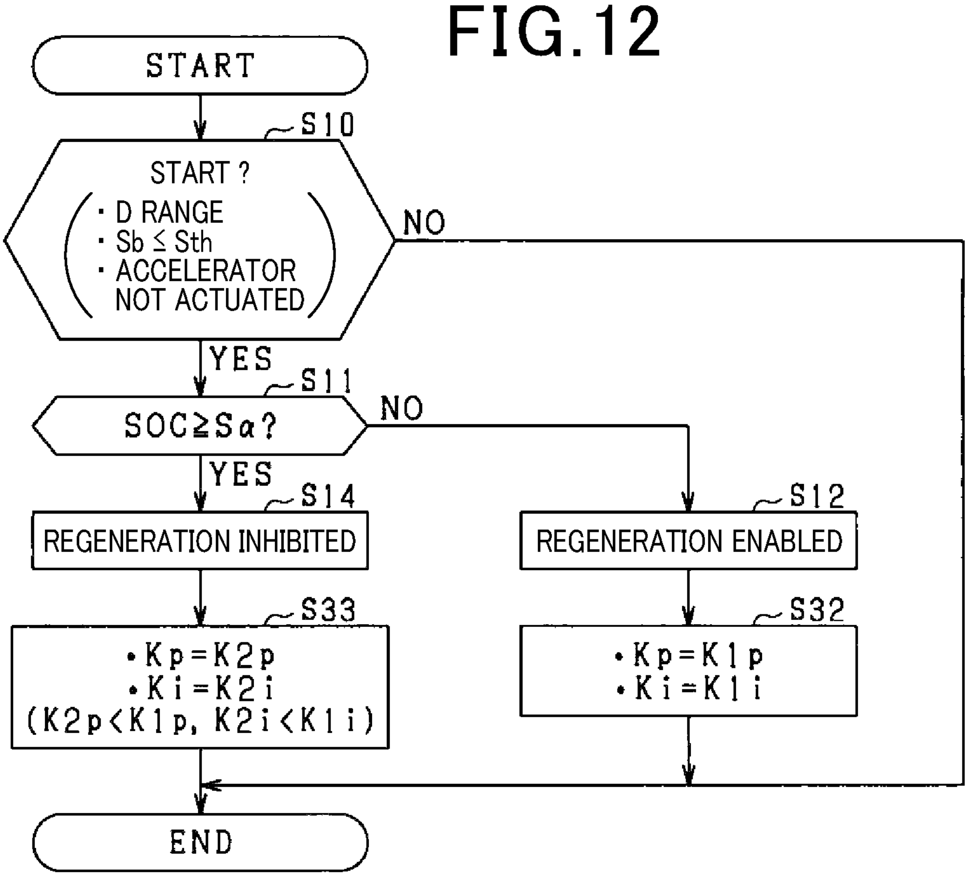
START
S10
START ?
· D RANGE
· Sb ≤ Sth
· ACCELERATOR NOT ACTUATED
NO
YES
S11
SOC≧Sα?
NO
YES
S14
REGENERATION INHIBITED
S12
REGENERATION ENABLED
S33
•Kp=K2p
•Ki=K2i
(K2p<K1p, K2i<K1i)
S32
•Kp=K1p
•Ki=K1i
END

## INTERNATIONAL SEARCH REPORT

International application No.
PCT/JP2020/041363

A. CLASSIFICATION OF SUBJECT MATTER

B60L 7/14(2006.01)i; B60L 15/20(2006.01)i; H02F 27/06(2006.01)i; B60L 9/18(2006.01)i; H02J 7/00(2006.01)i; H02J 7/10(2006.01)i; B60L 50/60(2019.01)i; B60L 58/13(2019.01)i; B60L 58/14(2019.01)i; B60L 58/15(2019.01)i

FI: B60L9/18 J; B60L15/20 J; B60L50/60; B60L58/13; B60L58/14; H02F27/06; B60L7/14; B60L58/15; H02J7/00 F; H02J7/10 H; H02J7/00 X

According to International Patent Classification (IPC) or to both national classification and IPC

B. FIELDS SEARCHED

Minimum documentation searched (classification system followed by classification symbols)

B60L7/14; B60L15/20; H02P 27/06; B60L9/18; H02J7/00; H02J7/10; B60L50/60; B60L58/13; B60L58/14; B60L58/15

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-232117 A (TOYOTA MOTOR CORP.) 07 September 2006 (2006-09-07) paragraphs [0033]-[0072], fig. 1-4 | 1-13 |
| A | JP 9-191506 A (NISSAN MOTOR CO., LTD.) 22 July 1997 (1997-07-22) paragraph [0045], fig. 13 | 1-13 |
| A | JP 2007-60761 A (NISSAN MOTOR CO., LTD.) 08 March 2007 (2007-03-08) paragraph [0049] | 1-13 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 December 2020 (23.12.2020) | 12 January 2021 (12.01.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2020/041363

| Patent Documents referred in the Report | Publication Date | Patent Family | Publication Date |
|---|---|---|---|
| JP 2006-232117 A | 07 Sep. 2006 | (Family: none) | |
| JP 9-191506 A | 22 Jul. 1997 | (Family: none) | |
| JP 2007-60761 A | 08 Mar. 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019201488 A
- JP 2020079446 A
- JP 6058564 B
- JP 2001045613 A